(19) Europäisches Patentamt
European Patent Office
Office européen des brevets

(11) Publication number: **0 411 845 A1**

## EUROPEAN PATENT APPLICATION

(21) Application number: 90308297.2

(22) Date of filing: **27.07.90**

(51) Int. Cl.⁵: **F02C 7/25, B64C 1/40**

(30) Priority: **02.08.89 GB 8917709**

(43) Date of publication of application:
**06.02.91 Bulletin 91/06**

(84) Designated Contracting States:
**AT DE FR GB IT SE**

(71) Applicant: **INSUMAT LIMITED**
**Hucclecote**
**Gloucester, GL3 4AD(GB)**

(72) Inventor: **Grimwood, David Alan**
**23 Paygrove Lane, Longlevens**
**Gloucester(GB)**

(74) Representative: **Hayward, Denis Edward Peter**
**et al**
**Lloyd Wise, Tregear & Co. Norman House**
**105-109 Strandand**
**London WC2R 0AE(GB)**

(54) **Flame retarding shield, particularly for a gas turbine engine.**

(57) An asbestos-free flame breakout shield, for use on gas turbine aircraft engines and the like, is provided having a facing layer of molybdenum silicated to form a plate-like lattice and a multi-ply backing layer of phenolic resin-impregnated glass fibre fabric laminate. This is applied to the support, which may be, for example, of stainless steel or titanium aircraft metal, with a layer of refractory heat-insulating material interposed. The refractory can be a ceramic material in microporous or fibre form. Such a flame breakout shield can be bent quite sharply to conform to the configuration of the support and will readily withstand a torch flame at 2000° K and 30 bar from an 18mm nozzle at a distance of 300mm for more than 180sec.

EP 0 411 845 A1

## GAS TURBINE ENGINE FLAME BREAKOUT SHIELDS

This invention relates to flame breakout shields for gas turbine engines.

In aircraft, it is customary to fit, in the vicinity of the combustion chambers of gas turbine engines, shields comprised of materials that will withstand high pressures and temperatures for a certain period, to protect structural parts. Such shields are, for instance, commonly situated over the engine combustion chamber, being either fixed to the pylon or strut carrying the engine pod or directly to the engine. The conditions to be withstood by such materials are rigorous and, in particular, they may be expected to be capable of resisting a torch flame with a diameter of 18mm at a temperature of 2000°K for an exposure time of 3 minutes at a gas pressure of 30 bar. The distance between the flame origin or outlet and the shield surface would vary for different aircraft but might typically be 300mm.

Apart from the specific ability to withstand torching, the shield materials must be able to withstand a generalised fire in the engine pod and be suitable for a long-term life on the exterior of an aircraft, remaining unaffected by prolonged exposure to temperatures in the range of -60°C up to +270°C, variations in altitude pressure from -300m up to +12,200m, a range of relative hudidities up to 100% at, say, 35°C, the mechanical vibrations characteristic of aircraft and acoustical vibrations up to 150 db and such agents as aviation fuel, oils and greases, hydraulic and refrigeration fluids, cleansers and scouring solutions and fungus and mildew. The expected useful life of such shields is typically equal to the life of the engine or airframe.

It is an object of the present invention to achieve an improved asbestos-free flame breakout shield.

According to the invention, there is provided an asbestos-free flame breakout shield the facing material of which is silicated molybdenum, preferably coated on both surfaces with an anti-oxidant coating. This facing layer may be backed by a further layer of a backing material comprising phenolic resin-impregnated glass fibre fabric.

Such a composite layer shield can be applied to whatever support structure it is desired to protect, normally a metal structure, for example of stainless steel, titanium or the like; except that it is preferred to interpose between the backing layer of the flame shield and the metal a layer of heat insulation, such as of microporous or fibrous refractory, e.g. ceramic, material.

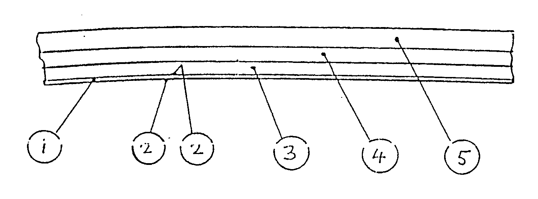

One particular flame breakout shield construction will now be described by way of example with reference to the accompanying drawing, which shows diagrammatically a cross-section through a flame breakout shield according to the invention.

In the drawing, a facing layer 1 of the flame shield consists of a molybdenum which has been silicated to form a plate-like lattice, that supplied under the trade designation MO46 by Special Metals Limited being suitable, this layer having a thickness of about 0.66mm. The silicated molybdenum facing layer 1 has on both surfaces an anti-oxide coating 2 of a silicide-based compound, a suitable one being sold under the trade name MURIDE T, the coating thickness being approximately 0.025mm. The anti-oxidant coated facing material 1 is backed by a thicker layer 3 of asbestos-free laminated glass fibre fabric impregnated with phenolic resin, that obtainable from TBA Industrial Products Ltd, of Rochdale, England under their type designation XM918 having been found very suitable. A multi-ply layer, e.g. six-ply layer, of this material may be used to give a thickness of about 3.18mm.

The composite flame shield is borne by a support structure 5, which may be a sheet of stainless steel, titanium or other material appropriate to the particular application, and interposed between the flame shield and the support sheet there is a layer 4 of ceramic insulation in microporous or fibre form. The insulation layer 4 wil be of whatever thickness may be necessary to prevent destructive heat being conducted to the support structure during the time of exposure for which the construction is designed.

It may be necessary to curve or bend the layers of the flame shield composite material quite sharply to suit the particular support configuration and the materials described above are suitable for that. As already indicated, a usual use for such flame shield materials is to protect the struts and pylons carrying aircraft engine pods.

Torching tests have been carried out on the above materials using circular samples with a diameter of about 100mm and a torch having a flame temperature and pressure of 2000°K and 30 bar and a nozzle diameter of 18mm. The distance from the nozzle to the sample was 300mm.

The silicated molybdenum material layer was tested both with and without a backing material layer and stainless steel support plate and, in all cases, was intact after a test duration of 180 seconds. The XM918 material layer cannot sustain such a torching test on its own but, as the backing layer for a facing material layer, and after a test duration of 180 seconds, it showed only a change of colour without destruction.

The above shield materials have also successfully withstood the torching test with the torch flame temperature and pressure increased to 2370°K and 33 bar and the distance from the torch nozzle to the sample decreased to 120mm.

The tables that follow shows comparison data for the above materials and two prior art flame shield materials employed for the facing layer (upper section of the table) and the backing layer (lower section of the table), respectively.

| COMPARISON TABLE FOR FACING MATERIALS | | | | |
|---|---|---|---|---|
| (At ambient temp.) | TA/10%W | | SI/MO | |
| Thickness | 018" (includes Muride 'T' coating) | | 028" (includes Muride 'T' coating) | |
| Tensile strength | 590 m.p.a. | | 656 m.p.a. | |
| Shear " | - | | - | |
| Youngs modulus | $22.3 \times 10^6$ lb in$^2$ | | $35.5 \times 10^6$ lb in$^2$ | |
| Shock Resistance | | | | |
| Elongation % | 16 | | 17.5 | |
| Proof Stress. 0.2% | 500.4 m.p.a. | | 566.8 m.p.a. | |
| Flexural strength | | | | |
| Density | 16.0 g/ml | | 9.8 g/ml | |
| COMPARISON TABLE FOR BACKING MATERIALS | DURESTOS RA7 | | XM 918 | |
| | A | B | A | B |
| Tensile strength M Pa | 252±31 | 166±19 | 357±70 | 336±10 |
| Tensile Modulus G Pa | 31.7±1.3 | 20.5±1.2 | 31.3±1.6 | 26.8±1.2 |
| Elongation at break % | .98±.13 | 1.07±.10 | 1.45±.36 | 1.94±.29 |
| Flexural strength M pa | 345±29 | 261±11 | 501±131 | 505±40 |
| Flexural Modulus G Pa | 16.5±.6 | 12.0±.8 | 23.0±2.9 | 21.8±1.7 |
| Izod Impact Strength J/M | 234±26 | 173±14 | 1927±363 | 1511±70 |
| Compressive strength M Pa | 436±94 | | 596±35 | |
| Thermal Conductivity W/M°K | .36 | | .36 | |
| Density g/ml | 1.83±0.01 | | 2.05±0.01 | |
| Water Absorption (24 Hours %) | 1.62±.38 | | 0.25±0.04 | |

A = tests in longitudinal direction.
B = tests in transverse direction.

**Claims**

1. An asbestos-free flame breakout shield the facing material of which is a layer of silicated molybdenum, optionally coated with an anti-oxidant coating.

2. A flame breakout shield according to Claim 1, wherein the facing layer is backed by a further layer of a backing material comprising synthetic resin-impregnated glass fibre fabric.

3. A flame breakout shield according to Claim 1 or Claim 2, wherein the facing layer is of molybdenum silicated to form a plate-like lattice and coated on both surfaces with an anti-oxidant silicide-based compound.

4. A flame breakout shield according to Claim 2, or Claims 2 and 3, applied to a metal support sheet, e.g. of titanium or stainless steel, with a layer of refractory thermal insulation interposed between the backing layer of the shield and the support.

5. A flame breakout shield according to Claim 4, wherein the refractory thermal insulation comprises a ceramic material in microporous or fibre form.

6. A flame breakout shield according to Claim 4 or Claim 5, wherein the configuration of the support is non-linear and the shield is curved or bent to conform to the configuration of the support.

7. A flame breakout shield according to any preceding claim, wherein the thickness of the facing layer is about 0.66mm.

8. A flame breakout shield according to Claim 3, wherein the thickness of each anti-oxidant coating is about 0.025mm.

9. A flame breakout shield according to Claims 2 and 7, wherein the backing layer is a multi-ply layer having an overall thickness of about 3.18mm.

10. A flame breakout shield according to Claims 8 and 9, tested to withstand a torch flame at a temperature of at least $2000^{\circ}$K and a pressure of at least 30 bar from a nozzle of 18mm diameter at a distance of not more than 300mm for at least 180 seconds.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-2115184 (LEWIS)<br>* the whole document * | 1, 3-10 | F02C7/25<br>B64C1/40 |
| A | | 2 | |
| A | DE-A-3446649 (BECHTEL)<br>* page 5, line 4 - page 9, line 22; figure 1 * | 2, 5, 6, 9 | |
| A | FR-A-2624582 (KELLER)<br>--- | | |
| A | FR-A-1011046 (VENTURINI)<br>----- | | |

**TECHNICAL FIELDS SEARCHED (Int. Cl.5 )**

F02C
B64C
B64G
A62C

The present search report has been drawn up for all claims

| Place of search | Date of completion of the search | Examiner |
|---|---|---|
| THE HAGUE | 24 OCTOBER 1990 | IVERUS D. |

EPO FORM 1503 03.82 (P0401)